# EUROPEAN PATENT SPECIFICATION

(11) **EP 3 090 453 B1**
(45) Date of publication and mention of the grant of the patent: **11.09.2019**
(21) Application number: 14830401.7
(22) Date of filing: 31.12.2014
(51) Int. Cl.: H01M 2/00, H01M 2/10, B60R 16/04

(54) **FIBER REINFORCED COMPOSITE PANEL AND VEHICLE BATTERY BOX MADE OF SAID PANEL**
FASERVERSTÄRKTE VERBUNDPLATTE UND AUS DER BESAGTEN PLATTE HERGESTELLTER FAHRZEUGBATTERIEKASTEN
PANNEAU COMPOSITE RENFORCÉ PAR FIBRES ET BOÎTE DE BATTERIE DE VÉHICULE CONSTITUÉE DUDIT PANNEAU

(30) Priority: 31.12.2013 CN 201320891339 U
(43) Date of publication of application: 09.11.2016
(73) Proprietor: Compagnie Plastic Omnium, 69007 Lyon (FR)
(72) Inventor: ANDRE, Gérald, F-01500 Saint Denis en Bugey (FR); CHERON, Hugues, F-01800 Meximieux (FR)
(74) Representative: Remy, Vincent Noel Paul
(86) International application number: PCT/EP2014/079493
(87) International publication number: WO 2015/101648

(56) References cited:
- EP-A1- 2 033 849
- US-A1- 2012 301 765
- US-B2- 6 861 156

## Description

### Technical Field

The present invention relates to the field of fiber reinforced composite products, and more particularly to a fiber reinforced composite panel made of fiber reinforced plastic, comprising a metal net and a vehicle battery box made of said panel.

### Background

The basic function of a vehicle battery box is to accommodate and protect battery packs, thereby ensuring sufficient strength while keeping a maximum accommodation space. It is typically designed to have a frame structure, i.e., side and bottom frames are welded with profiles, and the outside or both sides of the profiles are welded with a skin. It is, however, desired to make the battery box as light as possible, such as made of fiber reinforced plastic, for the sake of reduction of vehicle body mass and saving of oil consumption. Meanwhile, continuous metal panels or metal net inserts are embedded into the plastic so as to reinforce the plastic and enable the battery box to meet the requirements for electromagnetic shielding.

Document EP 2 033 849 A1 describes a battery case molded from plastics material from a semi-finished product pre-impregnated with fibers and reinforced by at least one insert, which may be in the form of metal sheets, semi-finished fiber products, textile layers or non-woven layers.

Document US 2012/301765 A1 discloses a battery case for a vehicle including a tray of resin and a frame made of metal which covers the tray.

An overmolding process is often used in the prior art to manufacture plastic-metal composite parts, i.e., stamping a metal panel into a desired shape beforehand, placing the same into a predetermined position in a mold, injecting plastic to fill in a mold cavity, and obtaining a desired composite part after cooling. In order to improve adhesion between metal and plastic, the metal panel is usually punched with holes in advance such that the plastic can pass through the holes to form riveting and thereby avoid detaching of the metal from the plastic. The composite part made in such a manner can bear larger load. Further, it is also known that the metal panel may be stamped into a particular shape or a metal net may be used to form a current conduction network in the composite part.

However, there is no way in the prior art to improve impact strength of a composite material, in particular, large-scale rupture resulting from crash of a composite material is unavoidable. Although a stamped metal panel which reinforces the composite material can be used to avoid or delay the rupture of the composite material when suffering from impact, to fulfill this purpose, however, the mass of the metal panel in need is too large, and such a metal panel, as a core member, has a limited forming freedom, which is obviously disadvantageous to manufacturing of a complex-shaped composite part. However, if a welded metal net or perforated metal panel of better formability is used, there may occur other problems: as far as a fiber reinforced composite material is concerned, long fibers can hardly pass through a metal insert, but congregate at one side, such that the fiber network may lose its continuity. The resultant composite part has a poor anti-shearing strength, which tends to result in interlayer peeling.

### Summary of the Invention

The object of the present invention is to solve the above technical problems. To this end, the present invention provides a fiber reinforced composite panel made of fiber reinforced plastic, comprising a continuous three-dimensional metal net that includes meshes defined by metal sheets, the metal sheets being inclined relative to a main surface of the panel, i.e., the angle therebetween is not zero.

The term "main surface of a panel" refers to a large-sized surface of the panel that is perpendicular to the thickness direction thereof.

When the three-dimensional metal net is overmolded with a fiber reinforced composite material, the fibers will flow along a direction perpendicular to the thickness direction of the panel as the composite material injected into the mold flows, and meanwhile has a tendency of moving along the thickness direction of the panel under the mold pressure and/or gravity applied along the thickness direction of the panel. The resultant outcome of the two motions is that the actual moving direction of the fibers is at an inclined angle with respect to the plane where the panel lies. According to the present invention, the metal net is three-dimensional and the metal sheets constituting the three-dimensional net extend at an inclined angle along the thickness direction of the panel, which completely complies with the actual moving direction of the fibers, so that the fibers are better guided to pass through the meshes of the metal net more easily, thereby forming a continuous fiber network in the thickness direction of the panel and at both sides of the metal net. For this reason, the obtained fiber reinforced composite panel can better resist interlayer peeling.

The fiber reinforced composite panel according to the present invention may also include, solely or in combination, the following features:
The panel has a thickness ranging from 2 to 7mm, preferably from 2.5 to 5mm; and the three-dimensional metal net has a thickness ranging from 0.5 to 2mm, preferably from 0.8 to 1.2mm.

The three-dimensional metal net has a surface density ranging from 0.2 to 2kg/m², preferably from 0.5 to 1kg/m².

The reinforcing fibers in the fiber reinforced composite material has a length larger than the maximum size of the meshes of the three-dimensional metal net, which preferably ranges from 10 to 50mm, and more preferably from 20 to 30mm. It should be appreciated that the fact that the length of the fibers is larger than the maximum size of the meshes allows to optimize the connection of the fiber network at both sides of the three-dimensional metal net.

The three-dimensional metal net is an expanded metal net, which is preferably made of steel, in particular stainless steel, or aluminum. The expanded metal net, also known as a metal panel net or a metal stretched net, is a metal net with meshes obtained by stamping, stretching and shaping a metal plate by a specialized apparatus. Use of an expanded metal net has multiple advantages: firstly, it is a one-piece three-dimensional metal net, which is very suitable for forming inclined meshes in the present invention to facilitate passage of fibers; secondly, compared with the welded metal net, it has no welding joints at the intersections and therefore has good electric conduction continuity; thirdly, it is easily shapable, and the material, thickness and mesh size thereof can be selected according to the shape and requirements of a component to be shaped; and finally, there is no need to make holes in the metal plate thanks to the special processing of the expanded metal net, which avoids waste, saves material, and reduces production cost. When the fiber reinforced composite panel according to the present invention serves as walls of a vehicle battery box, use of the expanded metal net is more advantageous. Since the meshes thereof are undetachable, it ensures good safety, especially when in car collision, the battery can still be entirely accommodated in the battery box. When in accidents, it can also prevent rescuers or passengers from putting their fingers or tools into the charged box.

The meshes of the expanded metal net are in a shape of parallelogram, preferably diamond, with a long pitch of 2 to 25mm, preferably 5 to 15mm. The meshes may also be in other shapes, such as hexagon or tortoiseshell.

The present invention also relates to a vehicle battery box, characterized in that it is made of the fiber reinforced composite panel as described above.

### Brief Description of the Drawings

The present invention will be described in more detail hereinafter with reference to the drawings. It should be readily appreciated by those skilled in the art that the drawings described herein are for illustration purposes only and are not intended to limit the scope of the present invention in any way. Identical or like structures are indicated with identical or like reference numerals. For illustration purposes, these drawings are not necessarily drawn in proportion.
Fig. 1 is a partial cross-sectional top view of a fiber reinforced composite panel according to the present invention; and
Fig. 2 is a cross-sectional view taken along line A-A of the fiber reinforced composite panel of Fig. 1.

### Detailed Description of the Embodiments

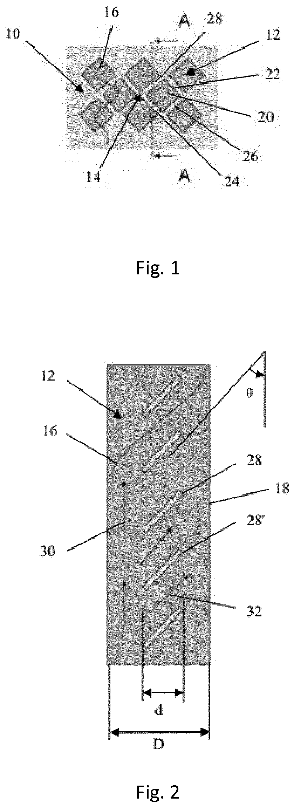

Fig. 1 schematically shows a cross-sectional view taken along a plane (namely, a plane perpendicular to the thickness direction of a fiber reinforced composite panel 10) parallel to a main surface of the panel according to the present invention. The panel 10 comprises a three-dimensional metal net 14, which is an expanded metal net in the present embodiment, with its meshes 20 in a shape of diamond, the meshes are filled with an overmolded fiber reinforced composite material 12, and long fibers 16 therein are schematically shown. The meshes 20 each are surrounded by two groups of parallel metal sheets 22, 24 and 26, 28.

Fig. 2 is a cross-sectional view taken along line A-A of the fiber reinforced composite panel of Fig. 1. It should be appreciated that Fig. 1 only shows a part of the panel, and the panel shown in Fig. 2 has a width that is larger than the one shown in Fig. 1. Moreover, it should be made clear that Fig. 2 only shows one group of parallel metal sheets 28, 28' for better explanation of the configuration of the three-dimensional metal net according to the present invention. It should be appreciated that there is still, in the plane taken along line A-A, a group of parallel metal sheets (not shown) that intersects with the group of shown metal sheets 28, 28'.

According to the present invention, the metal sheet 28 is inclined with respect to the main surface 18 of the panel with an angle θ of 20 to 45 degrees. In the present embodiment, θ is 45 degrees. In a further embodiment not shown, θ is 20 degrees. In a yet further embodiment not shown, θ is 30 degrees. Since the metal sheet 28 extends along the thickness direction of the panel 10 at an inclined angle, fibers 16 are guided, in the vicinity of the metal sheets, along the direction indicated by an arrow 32 through the inclined meshes of the metal net as the plastic creeps along the direction indicated by an arrow 30 during injection of the fiber reinforced composite material. Thus, a continuous fiber network can be formed in the thickness direction of the panel and at both sides of the metal net. Therefore, the resultant fiber reinforced composite panel can better resist interlayer peeling.

As shown, the panel has a thickness D ranging from 2 to 7mm, preferably 2.5 to 5mm; and the three-dimensional metal net has a thickness d ranging from 0.5 to 2mm, preferably 0.8 to 1.2mm. In the present embodiment, the thickness D of the panel is 3mm, and the thickness d of the three-dimensional metal net is 1mm.

In addition, the reinforced fiber in the present embodiment has a length of 25mm, which is larger than the maximum size 10mm (i.e., the long pitch of the diamond in the present embodiment) of the mesh of the metal net.

In the present embodiment, the expanded metal net 14 can be made of steel, in particular of stainless steel, the latter of which has prominent advantages in terms of low-frequency shielding and corrosion resistance. It should be appreciated that the expanded metal net can be made of other materials, such as aluminum. Since aluminum has excellent conductivity and small density, it provides a better electromagnetic shielding effect and the panel made of aluminum is lighter.

The present invention also relates to a vehicle battery box (not shown), the walls of which are made of the fiber reinforced composite panel as shown in Figs. 1 and 2.

The drawings and the above description describe the non-limitative particular embodiments of the present invention. Some conventional aspects have been simplified or omitted in teaching the invention principle. Those skilled in the art should know that the variations from these embodiments fall into the scope of the present invention. It should be understood by those skilled in the art that the above features can be combined in various ways to form a plurality of variations of the present invention. Thus, the present invention is not limited to the above particular embodiments, but defined by the following claims and their equivalents.

## Claims

1. A fiber reinforced composite panel, made of fiber reinforced plastic, **characterized in that** the panel comprises a continuous three-dimensional metal net that includes meshes defined by metal sheets, the metal sheets being inclined relative to a main surface of the panel, i.e., the angle therebetween is not zero.

2. The fiber reinforced composite panel according to claim 1, **characterized in that** the metal net is at an angle of 20 to 45 degrees with respect to the panel.

3. The fiber reinforced composite panel according to claim 1, **characterized in that** the meshes are defined by at least two groups of parallel opposite metal sheets.

4. The fiber reinforced composite panel according to claim 1, **characterized in that** the panel has a thickness ranging from 2 to 7mm, preferably from 2.5 to 5mm; and the three-dimensional metal net has a thickness ranging from 0.5 to 2mm, preferably from 0.8 to 1.2mm.

5. The fiber reinforced composite panel according to claim 1, **characterized in that** the three-dimensional metal net has a surface density ranging from 0.2 to 2kg/m², preferably from 0.5 to 1kg/m².

6. The fiber reinforced composite panel according to claim 1, **characterized in that** reinforcing fibers in the fiber reinforced composite material has a length larger than the maximum size of the meshes of the three-dimensional metal net, which preferably ranges from 10 to 50mm, and more preferably from 20 to 30mm.

7. The fiber reinforced composite panel according to claim 1, **characterized in that** the three-dimensional metal net is an expanded metal net, which is preferably made of steel, in particular stainless steel, or aluminum.

8. The fiber reinforced composite panel according to claim 5, **characterized in that** the meshes of the expanded metal net are in a shape of parallelogram, preferably diamond, with a long pitch of 2 to 25mm, preferably 5 to 15mm.

9. A vehicle battery box, **characterized in that** it is made of the fiber reinforced composite panel according to any one of the preceding claims.

## Patentansprüche

1. Faserverbundplatte aus faserverstärktem Kunststoff, **dadurch gekennzeichnet, dass** die Platte ein durchgehendes dreidimensionales Metallnetz aufweist, das durch Metallbleche definierte Maschen aufweist, wobei die Metallbleche relativ zu einer Hauptfläche der Platte geneigt sind, d.h, der Winkel dazwischen nicht Null ist.

2. Faserverbundplatte nach Anspruch 1, **dadurch gekennzeichnet, dass** das Metallnetz einen Winkel von 20 bis 45 Grad bezüglich der Platte aufweist.

3. Faserverbundplatte nach Anspruch 1, **dadurch gekennzeichnet, dass** die Maschen durch mindestens zwei Gruppen parallel gegenüberliegender Metallbleche definiert sind.

4. Faserverbundplatte nach Anspruch 1, **dadurch gekennzeichnet, dass** die Platte eine Dicke im Bereich von 2 bis 7 mm, vorzugsweise von 2,5 bis 5 mm aufweist; und das dreidimensionale Metallnetz eine Dicke im Bereich von 0,5 bis 2 mm, vorzugsweise von 0,8 bis 1,2 mm hat.

5. Faserverbundplatte nach Anspruch 1, **dadurch gekennzeichnet, dass** das dreidimensionale Metallnetz eine Oberflächendichte im Bereich von 0,2 bis 2 kg / m², vorzugsweise von 0,5 bis 1 kg / m² aufweist.

6. Faserverbundplatte nach einem der vorhergehenden Ansprüche, **dadurch gekennzeichnet, dass** Verstärkungsfasern im Faserverbundmaterial eine Länge aufweisen, die größer ist als die maximale Maschengröße des dreidimensionalen Metallnetzes, die vorzugsweise im Bereich von 10 bis 50 mm liegt und bevorzugter von 20 bis 30 mm.

7. Faserverbundplatte nach einem der vorhergehenden Ansprüche, **dadurch gekennzeichnet, dass** das dreidimensionale Metallnetz ein Streckmetallnetz ist, das vorzugsweise aus Stahl, insbesondere Edelstahl, oder Aluminium besteht.

8. Faserverbundplatte nach Anspruch 5, **dadurch gekennzeichnet, dass** die Maschen des Streckmetallnetzes eine Form eines Parallelogramms aufweisen, vorzugsweise eines Diamanten, mit einem langen Abstand von 2 bis 25 mm, vorzugsweise 5 bis 15 mm.

9. Fahrzeugbatteriekasten, **dadurch gekennzeichnet, dass** er aus der faserverstärkten Verbundplatte nach einem der vorhergehenden Ansprüche besteht.

## Revendications

1. Un panneau composite renforcé de fibres, fait en matière plastique renforcée de fibres, **caractérisé en ce que** le panneau comprend un filet métallique tridimensionnel continu qui comprend des mailles définies par des feuilles métalliques, les feuilles métalliques étant inclinées par rapport à une surface principale du panneau, c'est-à-dire que l'angle entre celles-ci n'est pas nul.

2. Le panneau composite renforcé de fibres selon la revendication 1, **caractérisé en ce que** le filet métallique est à un angle de 20 à 45 degrés par rapport au panneau.

3. Le panneau composite renforcé de fibres selon la revendication 1, **caractérisé en ce que** les mailles sont définies par au moins deux groupes de feuilles métalliques parallèles opposées.

4. Le panneau composite renforcé de fibres selon la revendication 1, **caractérisé en ce que** le panneau a une épaisseur allant de 2 à 7 mm, de préférence de 2,5 à 5 mm ; et le filet métallique tridimensionnel a une épaisseur comprise entre 0,5 et 2 mm, de préférence entre 0,8 et 1,2 mm.

5. Le panneau composite renforcé par des fibres selon la revendication 1, **caractérisé en ce que** le filet métallique tridimensionnel a une densité de surface allant de 0,2 à 2 kg/m², de préférence de 0,5 à 1 kg/m².

6. Le panneau composite renforcé par des fibres selon la revendication 1, **caractérisé en ce que** les fibres de renforcement dans le matériau composite renforcé par des fibres ont une longueur supérieure à la dimension maximale des mailles du filet métallique tridimensionnel, qui varie de préférence de 10 à 50 mm, et, de façon encore préférée, de 20 à 30 mm.

7. Le panneau composite renforcé par des fibres selon la revendication 1, **caractérisé en ce que** le filet métallique tridimensionnel est un filet métallique déployé, qui est de préférence en acier, en particulier en acier inoxydable, ou en aluminium.

8. Le panneau composite renforcé par des fibres selon la revendication 5, **caractérisé en ce que** les mailles du filet en métal déployé sont en forme de parallélogramme, de préférence en losange, avec un pas long de 2 à 25 mm, de préférence 5 à 15 mm.

9. Une boîte pour batterie de véhicule, **caractérisée en ce qu'**elle est faite du panneau composite renforcé de fibres selon l'une quelconque des revendications précédentes.
